# FASCICULE DE BREVET EUROPEEN

(11) **EP 2 148 403 B1**
(45) Date de publication et mention de la délivrance du brevet: **28.12.2011**
(21) Numéro de dépôt: 09290500.9
(22) Date de dépôt: 29.06.2009
(51) Int. Cl.: H02G 3/04

(54) **Couvercle encliquetable de goulotte, et goulotte munie d'un tel couvercle encliquetable**
Einrastbarer Deckel einer Rinne und Rinne, die mit diesem einrastbaren Deckel versehen ist
Clip-on gutter cover and gutter equipped with such a clip-on cover

(30) Priorité: 22.07.2008 FR 0804165
(43) Date de publication de la demande: 27.01.2010
(73) Titulaire: Legrand France, 87000 Limoges (FR)
(72) Inventeur: Couasnon, Patrick, 72240 Conlie (FR)
(74) Mandataire: Quantin, Bruno Marie Henri

(56) Documents cités:
- WO-A-99/52189

## Description

L'invention concerne un couvercle encliquetable de goulotte et une goulotte munie d'un tel couvercle encliquetable, notamment une goulotte de câblage.

Une goulotte est un élément allongé (avec une longueur pouvant être de plusieurs dizaines de centimètres voire de quelques mètres) de section sensiblement constante sur toute sa longueur. Il s'agit le plus souvent d'une pièce obtenue par extrusion d'un matériau thermoplastique, voire métallique. Sa fonction est en pratique d'assurer un guidage et/ou une protection, par exemple d'éléments allongés plus ou moins souples tels que des câbles électriques (on parle alors de goulotte électrique, voire de câblage électrique lorsqu'il s'agit de goulottes peu ou pas visibles, notamment dans le cas de goulottes situées dans des armoires électriques ou dans des faux-plafonds) ; d'autres goulottes servent à guider et protéger des tuyauteries ou des flexibles, par exemple pour des circuits de chauffage ou de climatisation.

En s'en tenant aux formes les plus courantes, une goulotte a classiquement une forme en U ou en V avec des angles plus ou moins arrondis pouvant aboutir à des formes partiellement ovoïdes ou cylindriques ; ces goulottes déterminent par leurs dimensions celles de la zone de guidage et de protection. Mais il est des cas où il est utile de fermer complètement cette zone de guidage ou de protection, au moyen d'un couvercle. C'est pourquoi, notamment dans le cas des goulottes électriques (en particulier les goulottes de câblage électrique), il est classique que certaines au moins des ailes latérales de la goulotte comportent des géométries particulières autorisant la venue en prise d'un couvercle encliquetable. En fait, l'encliquetage d'un couvercle sur une goulotte peut se faire le long des deux bords latéraux de ce couvercle, donc sur deux ailes de la goulotte, mais peut aussi, dans certains cas, se faire sur une seule aile, lorsque, par exemple, l'autre bord du couvercle est conformé pour constituer une charnière amovible (ou fixe) avec le bord d'une autre aile.

Un tel couvercle encliquetable est classiquement obtenu par extrusion d'une matière thermoplastique (des matériaux métalliques sont toutefois encore possibles, dans certaines applications).

Certaines goulottes comportent non seulement des ailes latérales mais aussi des ailes longitudinales intermédiaires, permettant de définir avec les ailes latérales des logements parallèles séparés ; les commentaires qui précèdent à propos du couvercle peuvent alors s'appliquer aux deux ailes latérales, mais aussi à tout couple d'ailes (par exemple une aile latérale et une aile intermédiaire).

On comprend aisément qu'un tel couvercle complète les fonctions de guidage et de protection de la goulotte, en vue notamment d'assurer une bonne retenue des éléments contenus dans cette goulotte ainsi qu'une bonne protection de ceux-ci vis-à-vis de l'extérieur (poussières, notamment) ; il peut y avoir en outre une fonction esthétique, y compris lorsque la goulotte est peu visible.

Lorsque la goulotte en U ou en V est complétée par un couvercle, il arrive qu'on utilise le mot « goulotte » pour l'ensemble des éléments, tandis que la pièce en U ou en V est alors désignée par l'expression « socle de goulotte », ou « fond de goulotte ». Dans la suite, on désignera par « socle de goulotte » la pièce dont la section détermine la section d'un logement recevant un ou plusieurs éléments et qui est susceptible d'être fermée par un couvercle (sans que la présence d'un tel couvercle soit nécessaire).

Bien que les socles de goulotte soient souvent disponibles en plusieurs longueurs, il est courant qu'aucune de ces longueurs ne corresponde à la longueur du support sur lequel on veut monter un tel socle de goulotte, de sorte qu'il est fréquent qu'il faille alors ajuster la longueur du socle de goulotte choisi à la longueur désirée.

Il est connu, à cet effet, de prévoir sur les socles de goulottes des lignes mécaniquement affaiblies. Celles-ci peuvent servir à dégager des ouvertures dans les faces d'une goulotte (voir notamment le document FR - 1 337 949 et plus récemment le document WO - 2006/076466) ; ces ouvertures sont parfois ouvertes vers le bord libre de ces faces (voir notamment le document US - 4 093 761 ou le document WO - 99/52189) pour faciliter le montage de dérivations. De même des lignes mécaniquement affaiblies transversales ont également été mises en oeuvre dans des goulottes pour en ajuster la longueur (voir notamment le document EP - A - 0 986 849) ; dans le cas où les ailes latérales de la goulotte sont conformées en sorte de présenter des languettes, éventuellement frangibles, les lignes mécaniquement affaiblies sont souvent prévues avec un pas faible, correspondant à la périodicité des fentes existant entre ces languettes, en regard de celles-ci (voir le document EP - A - 0 986 849 précité) ou en regard des languettes (voir le document EP - 1265331).

Ce principe de lignes mécaniquement affaiblies a en outre été mis en oeuvre dans d'autres pièces, de faibles dimensions, assurant des raccords entre des goulottes (voir notamment les documents US - B - 7 045 707 ou EP - B - 1 791 235), ou pour permettre le détachement d'accessoires vis-à-vis de socles de goulottes (par exemple des agrafes de retenue dans le document FR - A - 2 839 134).

Toutefois, ce principe n'a pas été mis en oeuvre dans le cas des couvercles encliquetables de goulotte.

Il est vrai que de tels couvercles encliquetables de goulotte ont une forme globale plus aplatie que les socles de goulotte ; en effet, dans le cas de socles de goulotte en U comportant un fond dont les bords sont longés par des ailes latérales, la dimension transversale de ces ailes (perpendiculairement au fond) peut représenter une fraction significative de la largeur du fond (typiquement au moins la moitié de cette largeur) ; par contre, les rebords que comportent les couvercles pour être encliquetables ont une largeur bien moindre, ce qui soulève des difficultés de découpe bien moindres que pour ces goulottes. Le besoin de lignes mécaniquement affaiblies paraît donc être moins important que dans les socles de goulotte.

Par ailleurs il faut noter que, pour être encliquetable le long d'au moins un bord, un couvercle de goulotte doit présenter une certaine souplesse (pour pouvoir se déformer au moment de l'encliquetage, ou au moment de la séparation vis-à-vis du socle de goulotte) mais aussi une certaine rigidité (pour garantir un bon maintien du couvercle sur le socle de goulotte, sans jeu susceptible de détériorer la protection de l'intérieur du socle de goulotte, par exemple vis-à-vis d'éléments extérieurs) ; on peut supposer que l'homme de métier estimait que tout affaiblissement mécanique du couvercle serait susceptible de détériorer le compromis de propriétés mécaniques garantissant l'efficacité de l'encliquetage.

On peut aussi supposer que, à propos de l'éventuelle fonction esthétique des couvercles de goulotte, l'homme de métier estimait que pour obtenir des bords de coupe satisfaisants, il était nécessaire de procéder à une coupe à la scie (ou analogue) plutôt qu'à l'aide d'une pince (qui implique en pratique un écrasement du couvercle auprès du bord découpé), et qu'une découpe le long de lignes mécaniquement affaiblies allait présenter des inconvénients analogues à ceux d'une découpe à la pince (bords a priori déchiquetés). Il peut être noté ici que, lorsque des lignes transversales mécaniquement affaiblies sont prévues dans un socle de goulotte, elles ne sont généralement pas visibles (elles sont notamment cachées par les éléments contenus par ce socle de goulottes), de sorte que les contraintes esthétiques, lorsqu'elles existent, sont moins importantes pour les socles de goulottes que pour leurs couvercles.

On peut donc supposer que l'homme de métier estimait que, d'une part, il était suffisamment facile de découper un couvercle pour ne pas souhaiter la présence de lignes mécaniquement affaiblies, et que, d'autre part, la présence de telles lignes mécaniquement affaiblies était susceptible de dégrader la fonction d'encliquetage du couvercle, tout en dégradant l'éventuelle fonction esthétique d'un tel couvercle.

En allant à l'encontre de tels préjugés, l'invention a pour objet de conformer un couvercle encliquetable de goulotte, notamment pour goulotte de câblage électrique, de manière à ce que sa mise à longueur en fonction des besoins soit facilitée sans nuire à la fonction d'encliquetage ou à l'éventuelle qualité esthétique qu'on peut attendre d'un tel couvercle de goulotte.

L'invention propose à cet effet un couvercle encliquetable de goulotte, typiquement obtenu par extrusion, comportant une paroi allongée suivant une direction longitudinale bordée par deux rebords latéraux dont l'un au moins est conformé en sorte d'être encliquetable sur une aile de socle de goulotte, caractérisé en ce que ce rebord est muni d'une pluralité d'amorces de rupture périodiquement espacées dans le sens longitudinal.

On peut noter qu'ainsi, l'invention prévoit de disposer des amorces de rupture dans au moins un rebord encliquetable du couvercle ; en effet, il est apparu que c'est dans cette zone qu'il était surtout intéressant de réduire la tenue mécanique du couvercle pour faciliter une découpe ; or de telles amorces de rupture sont apparues ne pas dégrader la fonction d'encliquetage ; ce n'est qu'en complément de telles amorces de rupture qu'il peut être intéressant de prévoir des lignes mécaniquement affaiblies comme dans certains socles de goulotte. On comprend que de telles amorces de rupture dans un rebord encliquetable, donc un rebord constituant une surépaisseur par rapport à la paroi du couvercle, facilitent un début de découpe bien propre, même avec une pince, puisqu'il n'est pas nécessaire d'appliquer un effort de découpe important.

Il est apparu que la périodicité des amorces de rupture, lorsque celles-ci sont visibles de l'extérieur de la goulotte, donne un certain aspect esthétique au couvercle.

Ces amorces de rupture peuvent être de diverses natures ; c'est ainsi qu'il peut s'agir de zones d'épaisseur ponctuellement réduite, telles que des dépressions ou des trous borgnes ; il peut aussi s'agir de lignes mécaniquement affaiblies (même si leur réalisation peut ne pas être aussi simple que sur des surfaces planes ; en effet, les rebords encliquetables ont souvent une forme complexe avec des replis, évoquant parfois la forme d'un Z).

Toutefois, selon une forme préférée de réalisation, ces amorces de rupture comportent des perforations, c'est-à-dire des orifices qui traversent de part en part une portion du rebord considéré (il peut s'agir d'une lumière, c'est à dire une perforation de forme allongée). Une telle forme d'amorce est raisonnablement aisée à réaliser, indépendamment de la géométrie locale du rebord considéré, sans toutefois dégrader sensiblement la fonction de protection que le couvercle peut être amené à assumer. Chaque amorce de rupture peut comporter une ou plusieurs perforations.

Les amorces de rupture peuvent avoir des localisations différentes dans le rebord encliquetable considéré.

Selon une première option, le rebord encliquetable comporte un coude de jonction à la paroi et un retour d'aile, et l'amorce de rupture, telle qu'une lumière (à savoir un creux typiquement allongé), est située dans ce coude de jonction (c'est-à-dire est en partie située dans la paroi et en partie dans le rebord lui-même). On comprend que la rigidité du coude de jonction participe à la qualité de l'encliquetage du couvercle sur un socle de goulotte ; le fait de prévoir une amorce de rupture dans ce coude facilite significativement une découpe depuis ce rebord jusque dans la paroi mais il est apparu que cela ne dégrade pas l'élasticité d'encliquetage.

Selon une autre option, ce rebord comporte un coude de jonction à la paroi et un rebord d'aile, et la lumière (ou toute autre forme d'amorce de rupture) est entièrement contenue dans le retour d'aile. Cela est notamment intéressant lorsque ce retour d'aile présente une surépaisseur pour assurer l'encliquetage, car cela minimise la résistance à la découpe de ce rebord, là où cela est souhaité.

Que l'amorce de rupture soit située dans le coude de jonction ou entièrement dans le rebord, il est avantageux que cette amorce soit à une distance non nulle du bord libre du retour d'aile. Cela assure une continuité de la tranche libre de ce rebord, ce qui contribue à éviter que l'amorce de rupture soit sollicitée de manière inopinée lors d'une manipulation du couvercle.

De manière tout à fait avantageuse, lorsque le couvercle est destiné à être encliqueté le long de chacun de ses rebords (c'est-à-dire que chacun de ses bords est encliquetable), chacun des rebords latéraux est muni d'une pluralité d'amorces de rupture périodiquement espacées dans le sens longitudinal, les amorces de rupture de chaque rebord latéral étant réparties selon un même pas longitudinal. Une telle régularité des amorces de rupture assure non seulement que la découpe peut se faire à partir de n'importe quel bord, mais contribue aussi à un certain aspect esthétique.

De manière tout à fait avantageuse, des rainures parallèles au moins discontinues s'étendent, au moins approximativement, à partir de ces amorces de rupture en direction de l'autre rebord latéral. De telles rainures constituent des lignes mécaniquement affaiblies le long desquelles il est facile d'obtenir une séparation du couvercle, par utilisation d'une pince (sans appliquer d'effort important susceptible de déformer le futur bord libre) ou par pliage. Dans une version simplifiée, lorsqu'il est prévu d'utiliser une pince, on peut prévoir de ne mettre en oeuvre que les amorces de rupture prévues dans le rebord (il peut toutefois être alors prévu de tracer des lignes visibles, par exemple imprimées, capables de guider le mouvement de la pince).

Dans le contexte, le fait que des rainures s'étendent au moins approximativement à partir des amorces de rupture signifie que ces rainures peuvent n'exister qu'à une distance non nulle quoique faible (représentant une faible fraction de la largeur de la paroi du couvercle, par exemple inférieure à 1/10^{ème}) de ces amorces de rupture ; toutefois, de manière avantageuse, ces rainures sont disposées de manière à ce que les amorces de rupture soient dans leur prolongement. Bien entendu, ces rainures peuvent aussi s'étendre jusqu'à ces amorces de rupture ; c'est en particulier le cas lorsque les amorces de rupture sont des rainures ménagées dans le rebord d'encliquetage.

De manière avantageuse, lorsque ce couvercle comporte des amorces de rupture le long de chacun de ses rebords, chacune des rainures parallèles s'étend, au moins approximativement, depuis une amorce de rupture de l'un des rebords latéraux jusqu'à, au moins approximativement, une amorce de rupture de l'autre des rebords latéraux (et, de préférence, chaque amorce de rupture est dans le prolongement d'une de ces rainures).

Ces rainures parallèles sont avantageusement perpendiculaires à la direction longitudinale du couvercle.

En variante également avantageuse, ces rainures parallèles au moins discontinues présentent un angle d'inclinaison non nul par rapport à la direction longitudinale, de préférence égal à environ 45° par rapport à cette direction longitudinale. Cela facilite la formation de raccords entre couvercles de goulotte présentant des directions différentes dans le plan de leurs parois.

De manière avantageuse, ce couvercle comporte, non pas une seule famille de rainures, mais au moins deux familles de rainures parallèles au moins discontinues qui s'étendent, au moins approximativement, à partir desdites amorces de rupture, ces familles de rainures présentant des orientations différentes d'une famille à l'autre par rapport à la direction longitudinale. Il est ainsi possible de découper le couvercle, à partir d'une amorce de rupture donnée, dans deux directions. De manière avantageuse, l'une des familles est perpendiculaire à la direction longitudinale du couvercle. De manière également avantageuse, l'une de ces familles est inclinée d'un angle de 45° par rapport à cette direction longitudinale. De manière avantageuse, chacune des amorces de rupture est, au moins approximativement, dans le prolongement d'une rainure de chacune de ces familles.

De manière préférée, les rainures au moins discontinues sont formées au moins sur une face de la paroi par rapport à laquelle les rebords latéraux sont en saillie, c'est-à-dire sur la face destinée à être tournée vers l'intérieur de la goulotte lorsque ce couvercle est encliqueté sur un socle de goulotte ; il en découle que ces rainures peuvent ne pas être visibles de l'extérieur. Il convient toutefois de noter que la présence d'un réseau régulier de rainures, discontinues ou continues, sur la face extérieure du couvercle peut conférer à ce couvercle un aspect esthétique.

Ces rainures peuvent consister en des réductions locales d'épaisseur (d'un seul côté de la paroi, voire des deux côtés), auquel cas elles peuvent être aussi bien continues que discontinues. Selon une autre option, ces rainures sont discontinues et traversantes (de sorte que la découpe consiste simplement à découper, par pliage ou à l'aide d'une pince, entre ces portions traversantes).

L'invention couvre également une goulotte, notamment une goulotte de câblage électrique, comportant deux ailes latérales formées de languettes séparées par des fentes disposées selon un pas longitudinal, munie d'un couvercle selon l'une quelconque des définitions précédentes, qui est encliqueté sur les extrémités d'au moins certaines des languettes d'une des ailes latérales, au moins une partie des amorces de rupture du couvercle ayant un pas longitudinal sensiblement égal au pas des fentes.

Des objets, caractéristiques et avantages de l'invention ressortent de la description qui suit, donnée à titre d'exemple illustratif non limitatif, en regard des dessins annexés sur lesquels :
- la figure 1 est une vue éclatée d'une goulotte formée d'un couvercle encliquetable conforme à l'invention, près à être encliqueté sur un socle de goulotte connu,
- la figure 2 est une vue de détail représentant, après encliquetage du couvercle sur le socle de goulotte, une partie du rebord encliquetable du couvercle et une partie libre d'un doigt d'une languette du socle de goulotte,
- la figure 3 est une vue de dessus du couvercle des figures 1 et 2, en perspective vue de dessus,
- la figure 4 en est une autre perspective en vue de dessous,
- la figure 5 est une vue agrandie du détail de la figure 4,
- la figure 6 est une vue analogue à la figure 3, correspondant à une variante de réalisation,
- la figure 7 en est une vue similaire à la vue de la figure 4, selon cette variante de réalisation,
- la figure 8 est une vue agrandie du détail de la figure 7,
- la figure 9 est une vue similaire à celle de la figure 6, selon une variante de réalisation,
- la figure 10 en est une vue similaire à celle de la figure 7, selon cette variante de réalisation,
- la figure 11 est une vue agrandie du détail de la figure 10,
- la figure 12 est une vue similaire à celle de la figure 3, correspondant à une autre variante de réalisation,
- la figure 13 en est une vue similaire à celle de la figure 4
- la figure 14 est une vue agrandie du détail de la figure 12,
- la figure 15 est une vue similaire à celle de la figure 12, selon une variante de réalisation,
- la figure 16 en est une vue similaire à celle de la figure 13,
- la figure 17 est une vue agrandie du détail de la figure 16,
- la figure 18 est une vue similaire à la figure 3, selon encore une autre variante de réalisation,
- la figure 19 en est une vue similaire à celle de la figure 4,
- la figure 20 est une vue agrandie du détail de la figure 18,
- la figure 21 est une vue similaire à celle de la figure 18, selon une autre variante de réalisation,
- la figure 22 en est une vue similaire à celle de la figure 19,
- la figure 23 est une vue agrandie du détail de la figure 21,
- la figure 24 est une vue en perspective en vue de dessus, selon un autre mode de réalisation d'un couvercle conforme à l'invention,
- la figure 25 en est une vue en perspective en vue de dessous,
- la figure 26 est une vue agrandie du détail de la figure 25,
- la figure 27 est une vue similaire à celle de la figure 24, selon une variante de réalisation,
- la figure 28 en est une vue similaire à celle de la figure 25,
- la figure 29 est une vue agrandie du détail de la figure 28,
- la figure 30 est une vue similaire à celle de la figure 27, selon une variante de réalisation,
- la figure 31 est une vue similaire à celle de la figure 28,
- la figure 32 est une vue agrandie du détail de la figure 31,
- la figure 33 est une vue similaire à celle de la figure 30, selon une variante de réalisation,
- la figure 34 est une vue similaire à celle de la figure 31,
- la figure 35 est une vue agrandie du détail de la figure 34,
- la figure 36 est une vue similaire à celle de la figure 24, selon une autre variante de réalisation,
- la figure 37 est une vue similaire à celle de la figure 25,
- la figure 38 est une vue agrandie du détail de la figure 37,
- la figure 39 est une vue similaire à celle de la figure 27, selon une autre variante de réalisation,
- la figure 40 en est une vue similaire à celle de la figure 28,
- la figure 41 est une vue agrandie du détail de la figure 40,
- la figure 42 est une vue en perspective de dessus d'un exemple d'assemblage de deux couvercles conformes à celui des figures 39 à 41,
- la figure 43 en est une autre vue en perspective,
- la figure 44 est une vue agrandie du détail de la figure 43,
- la figure 45 est une vue en perspective de dessus d'un autre exemple d'assemblage de deux couvercles conformes à celui des figures 39 à 41,
- la figure 46 en est une autre vue en perspective de dessous,
- la figure 47 est une vue agrandie du détail de la figure 46,
- la figure 48 est une vue en perspective de dessus d'encore un autre exemple d'assemblage de deux couvercles conformes à celui des figures 39 à 41,
- la figure 49 en est une vue en perspective de dessous, et
- la figure 50 est une vue agrandie du détail de la figure 49.

Les figures représentent divers exemples d'aménagements de couvercles de goulotte, en pratique extrudés, formant des amorces de rupture conférant à ces couvercles une fonction de sécabilité transversale facilitant la coupe à longueur ou d'angle par un utilisateur. Cette fonction de sécabilité contribue à diminuer le temps et l'effort nécessaires à l'utilisateur pour effectuer les coupes, en particulier dans la zone de jonction entre la paroi et les retours d'ailes, tout en conservant la rigidité voulue, notamment pour la fonction d'encliquetabilité.

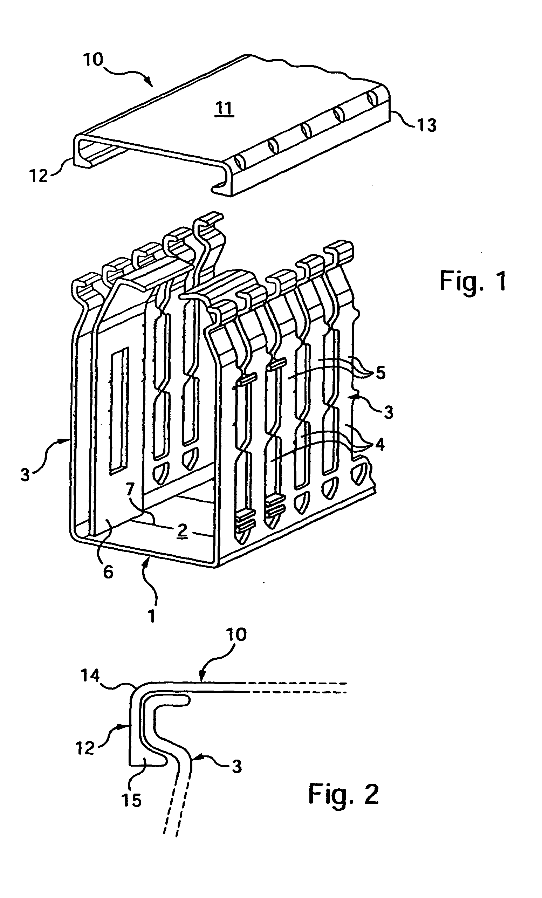

La figure 1 représente un socle de goulotte particulier désigné sous la référence générale 1, surmonté d'un couvercle conforme à l'invention, désigné sous la référence générale 10.

Un tel socle de goulotte est une pièce en U, classiquement extrudée, qui sert à véhiculer des fils électriques, notamment en milieu industriel et plus particulièrement dans des armoires électriques.

Un tel socle de goulotte 1 est conforme à l'enseignement du document EP - 0 986 849 précité, et ne sera ici décrit que de manière succincte.

Ce socle comporte ainsi un fond 2 dont les bords sont longés par deux ailes latérales 3. Ces ailes sont conformées en sorte de comporter une alternance de fentes 4 et de doigts 5. Le long des ailes peuvent être positionnés, en des emplacements choisis, des accessoires tels que celui désigné sous la référence 6. En travers du fond sont, dans l'exemple ici considéré, disposées des lignes mécaniquement affaiblies 7. Les extrémités libres des doigts 5 sont conformées en sorte de recevoir par encliquetage le couvercle 10.

En d'autres termes, les ailes sont découpées de manière à constituer, à la manière d'un peigne, une alternance de parties pleines et de creux débouchant ou non sur le bord libre des ailes, permettant ainsi de faire sortir, ou entrer, des fils électriques en divers emplacements des parois.

Ces socles existent en pratique en plusieurs longueurs et en plusieurs sections (combinant diverses hauteurs et diverses largeurs) ; en fonction de l'usage souhaité, il faut donc généralement couper ces socles de goulotte à la longueur désirée (voir les documents EP - A - 0 986 849, EP - A - 0986 850 et EP - 1 265 331, notamment)

Ce couvercle 10 est également une pièce en U, mais bien plus aplatie qu'un socle de goulotte (les dimensions du conduit défini par un socle de goulotte muni d'un couvercle sont déterminées par le socle, tandis que le couvercle ne forme en pratique qu'une face d'un tel conduit. Ce couvercle 10 comporte une paroi 11, ici plane (elle peut, en variante non représentée, être convexe vers l'extérieur, ou au contraire convexe vers l'intérieur) s'étendant suivant une direction longitudinale et bordée par deux rebords latéraux 12 et 13. Dans l'exemple considéré, chacun de ces bords est conformé en sorte d'être encliquetable sur une aile d'un socle de goulotte tel que celui représenté en-dessous de ce couvercle (bien entendu, un couvercle peut être encliqueté sur une variété de socles de goulottes, du moment que les ailes ont le même écartement et des extrémités de géométrie similaire). Plus précisément, ces rebords comportent ici un coude 14 de jonction à la paroi et un retour d'aile 15 (voir le détail de la figure 2).

Au moins un rebord de ce couvercle 10 est muni d'une pluralité d'amorces de rupture 16 périodiquement espacées dans le sens longitudinal.

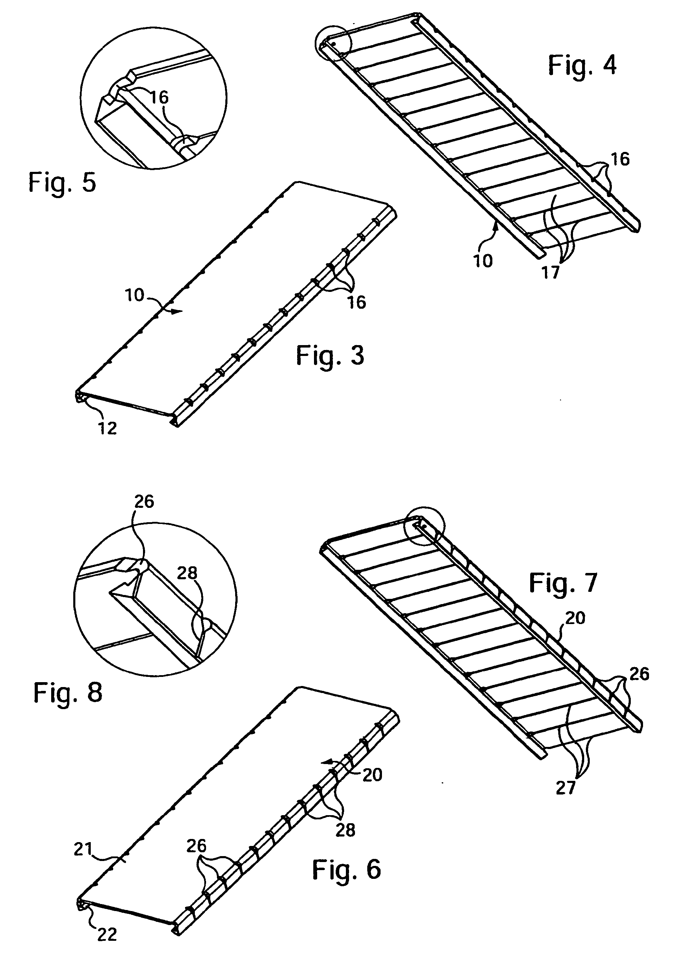

Dans le cas représenté à cette figure 1, chacun des bords 12 et 13 est muni de telles amorces de rupture (voir les figures 3 à 5).

Selon une caractéristique avantageuse, ces amorces de rupture sont disposées au même pas que les fentes 4 et que les lignes mécaniquement affaiblies 7 du socle de goulotte (lorsqu'elles existent), et le couvercle est avantageusement monté sur ce socle de manière à ce que ces amorces de rupture soient en regard de ces lignes affaiblies (ainsi, si les lignes affaiblies sont en regard des fentes, les amorces sont avantageusement en regard de ces fentes ; et si ces lignes affaiblies sont en regard des languettes comme dans le document EP - 1 265 331, les amorces de rupture sont avantageusement en regard de ces languettes). En variante non représentée, le socle de goulotte peut ne pas présenter de lignes mécaniquement affaiblies, mais uniquement des fentes facilitant la découpe transversale de ce socle par simple découpe du fond de celui-ci ; dans ce cas, le couvercle est avantageusement monté en sorte que ces amorces de rupture soient en regard de ces fentes. Selon encore une autre variante, seules certaines des extrémités des doigts sont conformés en sorte de permettre un encliquetage du couvercle (les autres doigts peuvent, notamment, être plus courts). Selon encore une autre variante, les amorces de rupture sont distribuées selon un pas qui est un sous-multiple du pas de ces fentes ou de ces lignes mécaniquement affaiblies, ce qui permet une meilleure précision dans la mise à longueur du couvercle.

Ces amorces de rupture 16 sont ici constituées de perforations (ou lumières, c'est-à-dire des orifices traversant ayant une forme allongée) identiques, réparties de manière périodique le long du rebord considéré.

Plus précisément, ces perforations 16, ou lumières, sont ici formées dans le coude de jonction 14 ; puisque ces amorces de rupture sont traversantes, elles sont visibles sur la paroi du couvercle et sur les retours d'ailes.

Elles peuvent être formées avec des outils de frappe, d'enlèvement de copeaux ou tout autre moyen (il peut ainsi s'agir de protubérances en mouvement alternatif agissant à la fin de l'extrusion, à un moment où la matière extrudée est encore plastique).

Dans cet exemple des figures 1, 3 à 5, ces perforations ont une forme ovale, donc sans angle marqué, ce qui contribue à maintenir la tenue mécanique du couvercle. En outre, ces perforations sont à une distance non nulle du bord libre du retour d'aile correspondant, de manière à conserver la continuité de celui-ci.

De manière avantageuse, lorsqu'il y a des amorces de rupture sur chacun des rebords latéraux (l'un d'entre eux peut ne pas être un rebord encliquetable, destiné par exemple à former une charnière fixe ou temporaire avec le bord libre de l'aile associée), ces amorces de rupture sont avantageusement disposées suivant le même pas longitudinal, en sorte d'être transversalement en regard, d'un rebord à l'autre. De manière également préférée, les amorces de rupture ménagées sur un couvercle sont toutes identiques, mais on peut, en variante, prévoir des formes différentes le long d'un rebord, voire d'un rebord à l'autre, de préférence selon une périodicité conférant un certain aspect esthétique.

De manière avantageuse, en complément de ces amorces de rupture 16, le couvercle 10 comporte en outre une famille de rainures parallèles au moins discontinues 17 s'étendant, au moins approximativement, à partir des amorces de rupture d'un rebord en direction de l'autre rebord. Plus précisément, puisqu'il y a des amorces de rupture sur chaque rebord, ces rainures 17 s'étendent au moins approximativement à partir des amorces de rupture d'un rebord jusqu'à, approximativement, des amorces de rupture de l'autre rebord.

Ces rainures sont généralement rectilignes et, en pratique, chacune des amorces de rupture est située dans le prolongement d'une de ces rainures.

Dans l'exemple représenté, ces rainures sont continues, perpendiculaires à la direction longitudinale du couvercle, et constituées d'une réduction locale d'épaisseur de la paroi du couvercle ; en outre, ces rainures sont ici uniquement formées sur la face de cette paroi vis-à-vis de laquelle les rebords viennent en saillie (c'est-à-dire la face interne du couvercle, lorsqu'il est encliqueté sur un socle de goulotte).

Les figures 6 à 8 représentent une variante de réalisation, dont les éléments similaires à ceux des figures 3 à 5 sont désignés par des signes de référence qui se déduisent de ceux utilisés sur ces figures 3 à 5 par addition du nombre 10.

Ces figures représentent un couvercle 20 comportant, comme le couvercle 10, une paroi 21 reliée à des retours d'ailes 22 par un coude de jonction dans lequel sont ménagées des perforations ovales 26; des perforations sont ménagées dans chaque rebord latéral, en regard transversalement d'un rebord à l'autre ; sur la face interne de la paroi sont disposées des rainures 27 qui s'étendent, au moins approximativement à partir des amorces d'un rebord jusqu'à, au moins approximativement, les amorces de l'autre rebord.

A la différence du couvercle 10, les perforations 26 du couvercle 20 se prolongent par de courtes rainures 28 jusqu'au bord libre du rebord considéré. Ces rainures sont ici extérieures (donc visibles lorsque le couvercle est encliqueté sur une un socle de goulotte), mais ces courtes rainures peuvent, en variante, être réalisées sur l'intérieur des retours d'aile, dans le prolongement des rainures 27.

En variante non représentée, ces courtes rainures peuvent être remplacées par des fentes étroites.

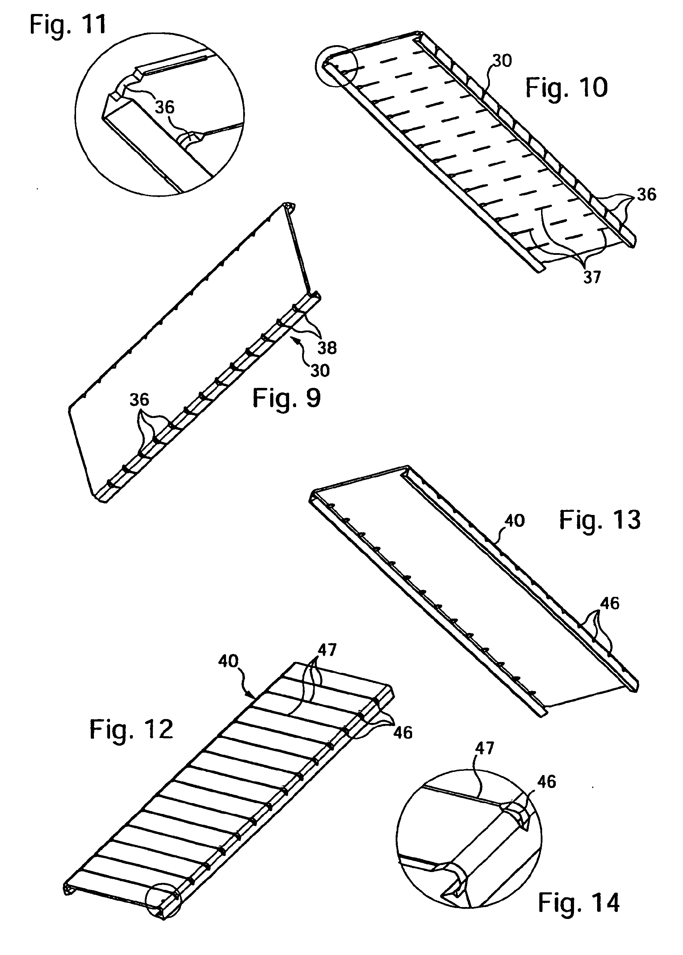

Les figures 9 à 11 représentent une autre variante de réalisation, dont les éléments similaires à ceux des figures 3 à 5 sont désignés par des signes de référence qui se déduisent de ceux utilisés sur ces figures 3 à 5 par addition du nombre 20.

Ces figures représentent ainsi un couvercle 30 comportant, comme le couvercle 10, une paroi 31 reliée à des retours d'ailes 32 par un coude de jonction dans lequel sont ménagées des perforations ovales 36 ; des perforations sont ménagées dans chaque rebord latéral, en regard transversalement d'un rebord à l'autre ; sur la face interne de la paroi sont disposées des rainures 37 qui s'étendent, au moins approximativement à partir des amorces d'un rebord jusqu'à, au moins approximativement, les amorces de l'autre rebord. Comme dans les figures 6 à 8, de courtes rainures 38 s'étendent, extérieurement, jusqu'au bord libre des retours d'aile.

A la différence du couvercle 20, les rainures 37, au lieu d'être continues comme dans les couvercles 10 et 20, sont ici discontinues, sans toutefois déboucher sur la face extérieure de la paroi (bien évidemment, ces rainures discontinues peuvent, en variante, être traversantes, ou être disposées sur la face extérieure de la paroi.

Les figures 12 à 14 représentent une autre variante de réalisation, dont les éléments similaires à ceux des figures 3 à 5 sont désignés par des signes de référence qui se déduisent de ceux utilisés sur ces figures 3 à 5 par addition du nombre 30.

Le couvercle 40 se distingue ainsi du couvercle 10 des figures 3 à 5 par le fait que les rainures 47 qui s'étendent, au moins approximativement, depuis des amorces 46 de l'un des rebords latéraux jusqu'à, au moins approximativement, des amorces de ruptures 46 de l'autre rebord, sont réalisées uniquement sur la face extérieure du couvercle, c'est-à-dire sur la face visible lorsque le couvercle est encliqueté sur un socle de goulotte.

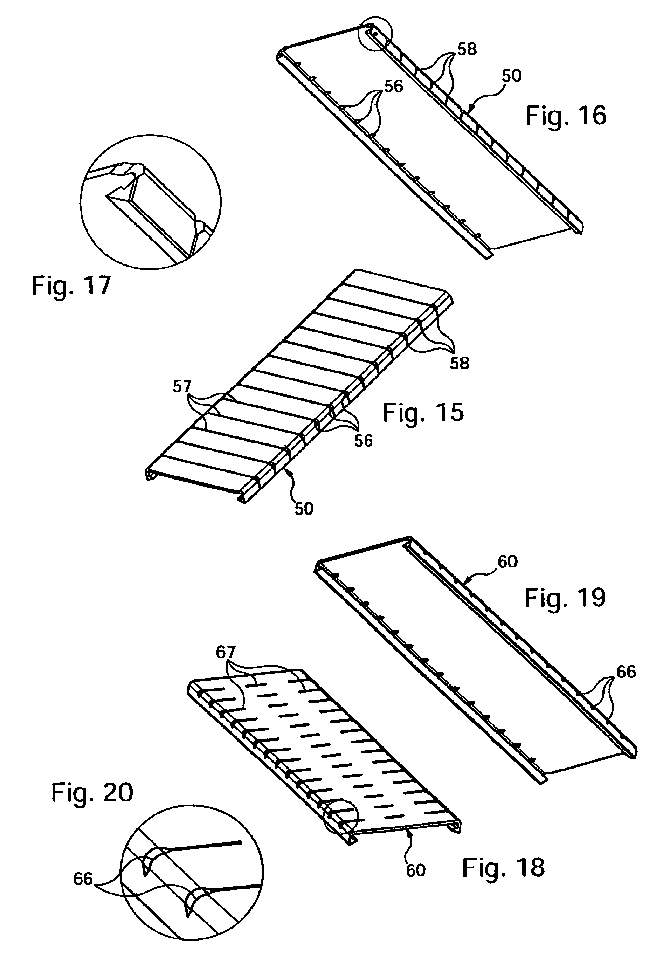

Les figures 15 à 17 représentent une autre variante de réalisation, dont les éléments similaires à ceux des figures 12 à 14 sont désignés par des signes de référence qui se déduisent de ceux utilisés sur ces figures 12 à 14 par addition du nombre 10.

Le couvercle 50 qui y est représenté est très similaire au couvercle 40, à ceci près que de courtes rainures extérieures 58 s'étendent depuis les perforations ou lumières 56 jusqu'au bord libre du rebord latéral concerné.

Les figures 18 à 20 représentent une autre variante de réalisation, dont les éléments similaires à ceux des figures 3 à 5 sont désignés par des signes de référence qui se déduisent de ceux utilisés sur ces figures 3 à 5 par addition du nombre 50.

Le couvercle 60 qui y est représenté diffère du couvercle 10 par le fait que les rainures 67 sont situées sur la face extérieure de la paroi, et sont discontinues (non traversantes ; en effet, elles ne sont pas visibles sur la face interne de la paroi), alors que les rainures 17 sont situées sur la face interne et sont continues.

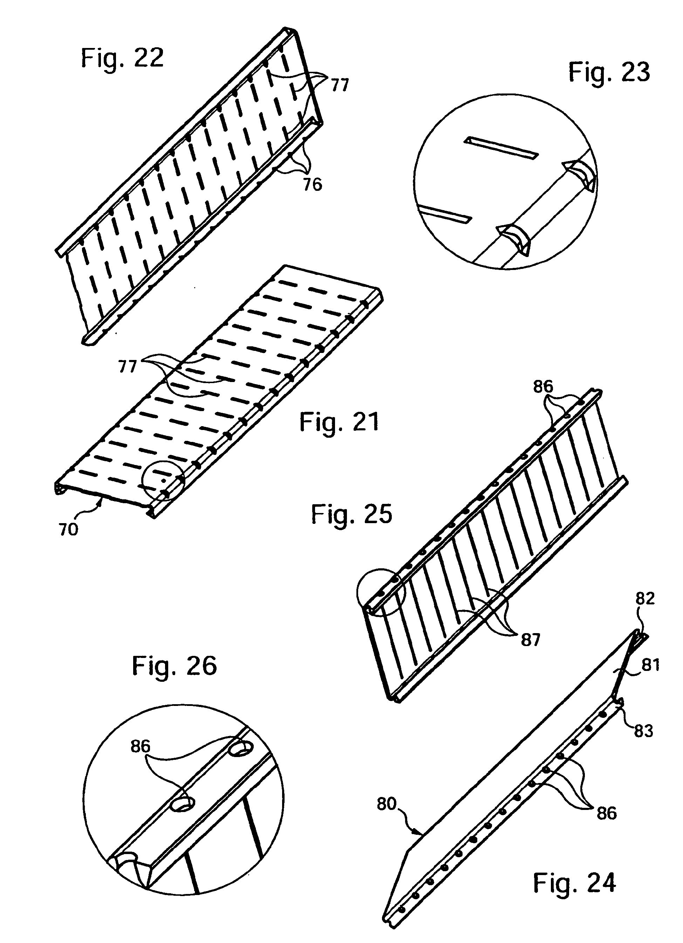

Les figures 21 à 23 représentent une autre variante de réalisation, dont les éléments similaires à ceux des figures 18 à 20 sont désignés par des signes de référence qui se déduisent de ceux utilisés sur ces figures 18 à 20 par addition du nombre 10.

Le couvercle 70 se distingue du couvercle 60 par le fait que les rainures discontinues 77 sont traversantes, c'est-à-dire qu'elles sont visibles de chaque côté de la paroi de ce couvercle. En outre, en raison de ce caractère traversant, ces rainures discontinues s'arrêtent à distance des amorces de rupture 76.

Ces figures 1 à 23 représentent diverses variantes de réalisation d'un couvercle comportant des perforations, ou lumières, traversant le coude de jonction qui se situe entre la paroi et le retour d'aile :
- avec de courtes rainures s'étendant, ou non, jusqu'au bord libre du retour d'aile (du côté externe, voire du côté interne de ceux-ci),
- avec des rainures transversales qui sont discontinues ou continues, qui s'étendent sur la face interne ou la face externe de la paroi du couvercle, voire qui sont discontinues et traversantes.

On comprend aisément que ces diverses variantes peuvent être combinées.

Les figures 24 à 26 représentent une variante de réalisation d'un couvercle selon l'invention qui se distingue des précédentes formes de réalisation par le fait que les amorces de rupture, qui sont également des perforations, sont ici réalisées dans le retour d'aile proprement dit, c'est-à-dire à distance du coude de jonction (même si elles peuvent l'approcher de très près).

Les éléments similaires à ceux des figures 3 à 5 sont désignés par des signes de référence qui se déduisent de ceux de ces figures par l'addition du nombre 70.

Ainsi, le couvercle 80 de ces figures 24 à 26 comporte une paroi 81 et des rebords latéraux 82 et 83, comportant un coude de jonction et un retour d'aile.

Les perforations 86 sont en regard transversalement d'un rebord à l'autre, dans le prolongement de rainures 87 qui sont continues et disposées sur la face interne de la paroi.

Dans l'exemple ici considéré, ces perforations sont sensiblement cylindriques, ce qui est une forme de perforations particulièrement simple à réaliser, indépendamment de la géométrie de ces rebords latéraux.

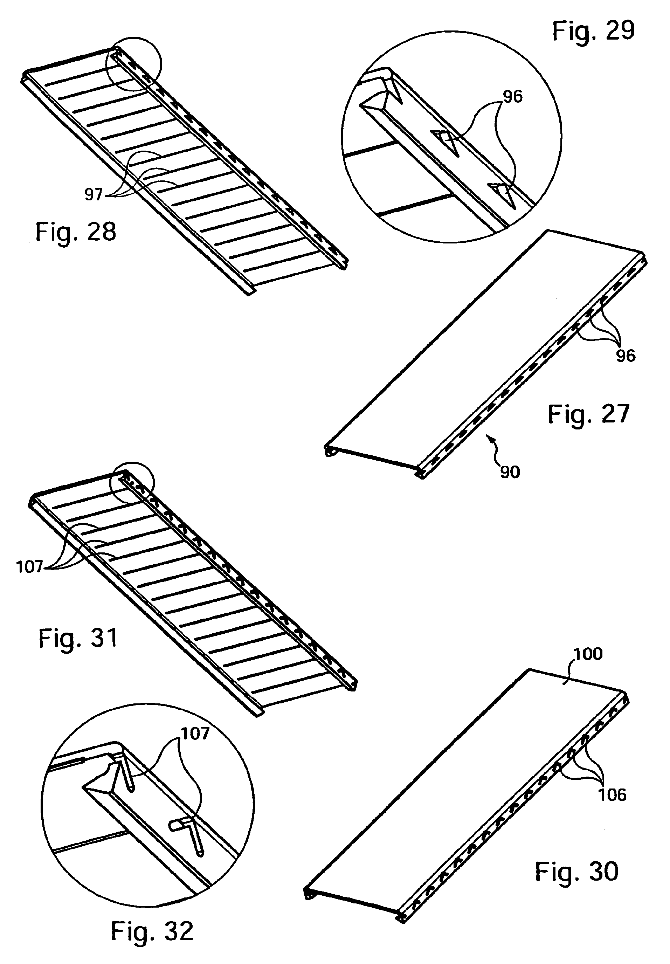

Les figures 27 à 29 représentent une autre variante de réalisation, dont les éléments similaires à ceux des figures 24 à 26 sont désignés par des signes de référence qui se déduisent de ceux utilisés sur ces figures 24 à 26 par addition du nombre 10.

Le couvercle 90 se distingue du couvercle 80 par le fait que les perforations 96 ne sont plus cylindriques mais en forme de triangle avec une pointe en direction du coude de jonction, et des rainures internes 97.

Les figures 30 à 32 représentent une autre variante de réalisation, dont les éléments similaires à ceux des figures 27 à 29 sont désignés par des signes de référence qui se déduisent de ceux utilisés sur ces figures 27 à 29 par addition du nombre 10.

Ainsi, le couvercle 100 se distingue du couvercle 90 par le fait que les perforations, au lieu d'être triangulaires, sont simplement en forme d'accent circonflexe, avec la pointe vers le coude de jonction, et donc vers les rainures internes 107.

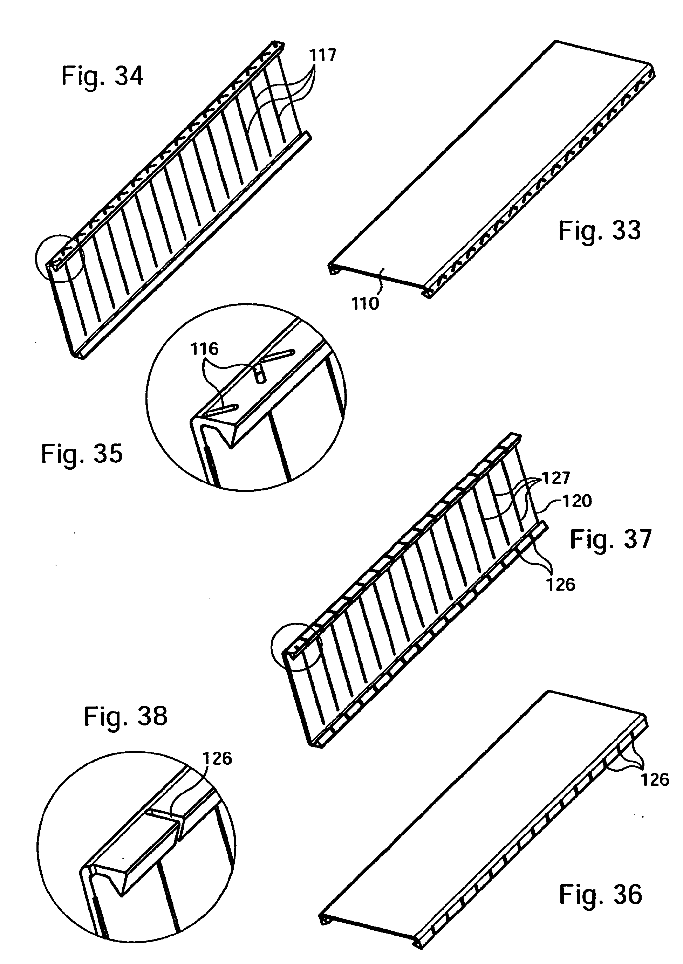

Les figures 33 à 35 représentent une autre variante de réalisation, dont les éléments similaires à ceux des figures 30 à 32 sont désignés par des signes de référence qui se déduisent de ceux utilisés sur ces figures 30 à 32 par addition du nombre 10.

Le couvercle 110 se distingue du couvercle 100 par le fait que, au lieu d'être traversantes, les amorces de rupture 116 ne sont que des creux borgnes qui ne débouchent que vers l'extérieur ; en outre, chaque amorce de rupture est formée de deux creux allongés qui convergent vers le coude de jonction, sans se rejoindre comme dans le couvercle 100. En variante non représentée, les creux borgnes débouchent sur la face interne des rebords latéraux.

Les figures 36 à 38 représentent une autre variante de réalisation, dont les éléments similaires à ceux des figures 24 à 26 sont désignés par des signes de référence qui se déduisent de ceux utilisés sur ces figures 24 à 26 par addition du nombre 40.

Ainsi le couvercle 120 se distingue du couvercle 80 par le fait que, alors que les amorces de rupture 86 sont des perforations fermées, les amorces de rupture 126 sont des fentes débouchant hors du retour d'aile.

Ainsi les figures 24 à 38 représentent divers exemples de réalisation de couvercles dont les amorces de rupture sont disposées, non plus dans le coude de jonction, mais entre ceux-ci et le bord libre des rebords latéraux (voire jusqu'à ces derniers.

Les figures suivantes illustrent des variantes concernant l'orientation des rainures.

Dans les divers exemples décrits ci-dessus, les rainures sont toutes transversales à la direction longitudinale du couvercle.

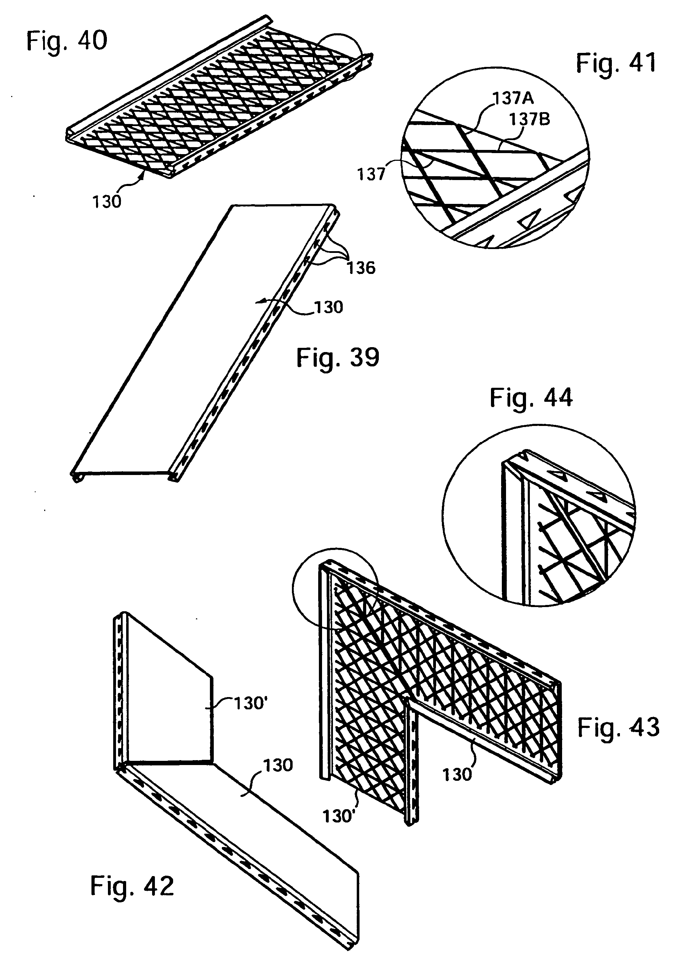

Les figures 39 à 50 représentent ainsi des couvercles qui comportent, non pas une seule famille de rainures parallèles, mais plusieurs familles présentant chacune une orientation différente par rapport à la direction longitudinale.

Le couvercle 130 des figures 39 à 41 est similaire au couvercle 90 des figures 27 à 29. Les éléments similaires à ceux de ces figures 27 à 29 sont désignés, sur ces figures 39 à 41, par des signes de référence qui se déduisent de ceux utilisés sur ces figure 27 à 29 par addition du nombre 40.

Ainsi ce couvercle 130 comporte, sur chaque rebord latéral des perforations en triangle 136 qui sont situés entre le coude de jonction et le bord libre des retours d'aile, ainsi que des rainures 137 qui s'étendent, au moins approximativement, depuis des amorces de l'un des rebords latéraux jusqu'à, au moins approximativement, des amorces de l'autre de ces rebords latéraux. Ces rainures sont perpendiculaires à la direction longitudinale du couvercle (comme précédemment, les amorces de rupture 136 sont disposées en regard transversalement les unes des autres, d'un rebord à l'autre, avec un même pas longitudinal.

A la différence du couvercle 90, le couvercle 130 comporte en outre deux autres familles de rainures s'étendant chacune, au moins approximativement, depuis une amorce de rupture de l'un des rebords latéraux jusqu'à, au moins approximativement, une amorce de rupture de l'autre rebord latéral.

Plus précisément, le couvercle comporte, ici sur la même face que les rainures 137 (à savoir, dans l'exemple considéré, sur la face interne de la paroi du couvercle), deux autres familles de rainures parallèles repérées 137A et 137B.

Ces familles de rainures parallèles 137A et 137B ont avantageusement des orientations de signes opposés, de préférence égales, de manière à former un réseau à maille élémentaire triangulaire avec les rainures 137.

De plus les orientations de ces familles de rainures 137A et 137B sont avantageusement égales à +45° et -45° (au moins approximativement) par rapport à la direction longitudinale du couvercle. Un tel choix permet que, au choix, la découpe de ce couvercle peut se faire de manière perpendiculaire à la direction longitudinale comme dans les divers couvercles décrits ci-dessus, mais aussi à 45°, de manière à pouvoir former des raccords à 90° avec un couvercle de même structure.

C'est ainsi que les figure 42 à 44 représentent deux couvercles conformes à celui des figures 39 à 41, notés 130 et 130', découpés selon une ligne 137A et une ligne 137B, respectivement. Il en découle la formation d'un raccord bien net, respectant d'éventuelles contraintes d'esthétique.

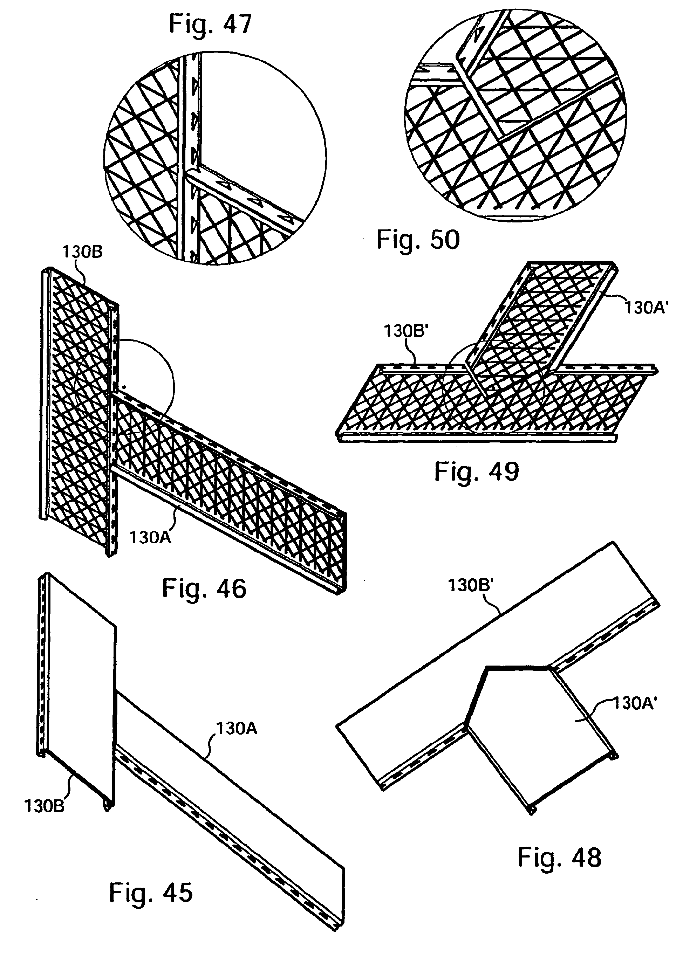

Les figures 45 à 47 représentent une autre possibilité d'assemblage de couvercles 130A et 130B similaires à celui des figures 39 à 41. Il s'agit d'un assemblage en T : le couvercle 130A a été découpé suivant une rainure de la famille 137, et sa tranche ainsi formée est affrontée à un rebord latéral du couvercle 130B. Dans l'exemple représenté, ce rebord latéral a été laissé en l'état, mais il est bien entendu possible, en variante de découper localement ce rebord le long du coude de jonction.

Les figures 48 à 50 représentent une autre variante d'assemblage de tels couvercles notés 130A' et 130B' sans avoir à découper (si cela est utile) le rebord latéral. Dans cet exemple d'assemblage, on découpe l'un des couvercles, ici le couvercle 130A', en pointe, en profitant à la fois des rainures 137A et 137B ; quant au couvercle 130B', il est lui aussi découpé en profitant des deux familles de rainures inclinées, en sorte de former une entaille en pointe (un pliage du couvercle 130B' n'est ici pas approprié, et il est préférable d'utiliser une pince, ou tout autre outil approprié).

On comprend aisément que le choix d'une inclinaison donnée pour l'une des familles de rainures impose une relation entre le pas longitudinal des amorces de rupture et la largeur du couvercle lorsqu'il est prévu que les diverses rainures s'étendent depuis une amorce de rupture d'un rebord latéral jusqu'à une amorce de rupture de l'autre rebord. Cela explique que, lorsqu'il y a plusieurs familles de rainures inclinées, celles-ci ont avantageusement des inclinaisons égales mais de sens opposés.

En outre, lorsqu'il est souhaité de pouvoir procéder à des découpes en pointe comme dans l'exemple des figures 48 à 50, on comprend qu'il est utile de prévoir que les lignes inclinées se croisent au milieu de la largeur de chaque couvercle.

Bien entendu, les caractéristiques élémentaires des diverses variantes qui ont été décrites à titre d'exemple peuvent se combiner à volonté, qu'il s'agisse de la position des amorces de rupture et de leur forme (et de leur caractère traversant ou non), ou de l'emplacement des familles de rainures discontinues ou continues (il peut ainsi y avoir, notamment, des rainures sur chacune des faces de la paroi, selon des orientations identiques (avec des rainures qui sont en regard au travers de l'épaisseur de la paroi), ou différentes (avec des rainures selon une première orientation sur une face et des rainures selon une autre orientation sur l'autre face ; à titre d'exemple de variante du couvercle 130 des figures 39 à 41, on peut prévoir que les rainures transversales 137 sont sur une face tandis que les rainures inclinées sont disposées sur l'autre face).

Les amorces de rupture peuvent aussi être simplement des prolongements, sur les rebords latéraux, de certaines au moins des rainures formées sur les parois (typiquement les rainures qui sont perpendiculaires à la direction longitudinale du couvercle.

## Revendications

1. Couvercle encliquetable de goulotte (10, 20, 30, 40, 50, 60, 70, 80, 90, 100, 110, 120, 130), comportant une paroi allongée (11) suivant une direction longitudinale bordée par deux rebords latéraux (12, 13) dont l'un au moins est conformé en sorte d'être encliquetable sur une aile (3) de socle de goulotte (1), **caractérisé en ce que** ce rebord est muni d'une pluralité d'amorces de rupture (16, 26, 36, 46, 56, 66, 76, 86, 96, 106, 116, 126, 136) périodiquement espacées dans le sens longitudinal.

2. Couvercle selon la revendication 1, **caractérisé en ce que** ces amorces de rupture (16, 26, 36, 46, 56, 66, 76, 86, 96, 106, 116, 136) comportent une lumière traversant ledit rebord.

3. Couvercle selon la revendication 1 ou la revendication 2, **caractérisé en ce que** ce rebord comporte un coude de jonction à la paroi et un retour d'aile, et les amorces de rupture (16, 26, 36, 46, 56, 66, 76) sont situées dans ce coude de jonction.

4. Couvercle selon la revendication 1 ou la revendication 2, **caractérisé en ce que** ce rebord comporte un coude de jonction à la paroi et un rebord d'aile, et les amorces de rupture (126) sont entièrement contenues dans le retour d'aile.

5. Couvercle selon la revendication 3 ou la revendication 4, **caractérisé en ce que** les amorces de rupture (16, 46, 66, 76, 86, 96, 106, 116, 136) sont à une distance non nulle du bord libre du retour d'aile.

6. Couvercle selon l'une quelconque des revendications 1 à 5, **caractérisé en ce que** chacun des rebords latéraux est muni d'une pluralité d'amorces de rupture (16, 26, 36, 46, 56, 66, 76, 86, 96, 106, 116, 126, 136) périodiquement espacées dans le sens longitudinal, les amorces de rupture de chaque rebord latéral étant réparties selon un même pas longitudinal.

7. Couvercle selon l'une quelconque des revendications 1 à 6, **caractérisé en ce que** des rainures (17, 27, 37, 47, 57, 67, 77, 87, 97, 107, 117, 127, 137, 137A, 137B) parallèles au moins discontinues s'étendent, au moins approximativement, à partir de ces amorces de rupture d'un rebord encliquetable en direction de l'autre rebord latéral.

8. Couvercle selon la revendication 7, **caractérisé en ce que** ces rainures parallèles au moins discontinues (137A, 137B) présentent un angle d'inclinaison non nul par rapport à la direction longitudinale.

9. Couvercle selon la revendication 8, **caractérisé en ce que** ces rainures parallèles au moins discontinues (137A, 137B) présentent un angle d'environ 45° par rapport à la direction longitudinale.

10. Couvercle selon l'une quelconque des revendications 7 à 9, **caractérisé en ce que** ce couvercle comporte au moins deux familles de rainures parallèles au moins discontinues 137, 137A, 137B) qui s'étendent, au moins approximativement, à partir desdites amorces de rupture, ces familles de rainures présentant des orientations différentes d'une famille à l'autre par rapport à la direction longitudinale.

11. Couvercle selon la revendication 10, **caractérisé en ce que** l'une (137) des familles de rainures au moins discontinues est perpendiculaire à la direction longitudinale du couvercle.

12. Couvercle selon l'une quelconque des revendications 7 à 11, **caractérisé en ce que**, chacun des bords latéraux étant muni d'une pluralité d'amorces de rupture réparties selon un même pas longitudinal, chacune des rainures (17, 27, 37, 47, 57, 67, 77, 87, 97, 107, 117, 127, 137, 137A, 137B) s'étend, au moins approximativement, depuis une amorce de rupture de l'un des rebords latéraux jusqu'à, au moins approximativement, une amorce de rupture de l'autre des rebords latéraux.

13. Couvercle selon l'une quelconque des revendications 7 à 12, **caractérisé en ce que** les rainures au moins discontinues (17, 27, 37, 77, 87, 97, 107, 117, 127, 137, 137A, 137B) sont formées au moins sur une face de la paroi par rapport à laquelle les rebords latéraux sont en saillie.

14. Couvercle selon l'une quelconque des revendications 7 à 13, **caractérisé en ce que** les rainures au moins discontinues (76) sont traversantes.

15. Goulotte de câblage électrique comportant deux ailes latérales (3) formées de languettes (5) séparées par des fentes (4) disposées selon un pas longitudinal, munie d'un couvercle selon l'une quelconque des revendications 1 à 14 qui est encliqueté sur les extrémités d'au moins certaines des languettes d'une des ailes latérales, au moins une partie des amorces de rupture (16, 26, 36, 46, 56, 66, 76, 86, 96, 106, 116, 126, 136) du couvercle ayant un pas longitudinal sensiblement égal au pas des fentes.

## Claims

1. A snap-fittable ducting cover (10, 20, 30, 40, 50, 60,70, 80, 90, 100, 110, 120, 130) comprising a wall (11) extending in a longitudinal direction bordered by two lateral rims (12, 13) at least one of which is shaped such that it is snap-fittable onto a wing (3) of the ducting base (1), **characterized in that** said rim is provided with a plurality of break initiators (16, 26, 36, 46, 56, 66, 76, 86, 96, 106, 116, 126, 136) which are spaced in a periodic manner in the longitudinal direction.

2. A cover according to claim 1, **characterized in that** said break initiators (16, 26, 36, 46, 56, 66, 76, 86, 96, 106, 116, 136) comprise an opening passing through said rim.

3. A cover according to claim 1 or claim 2, **characterized in that** said rim comprises a bend for jointing to the wall and a wing return, and the break initiators (16, 26, 36, 46, 56, 66, 76) are located in said joint bend.

4. A cover according to claim 1 or claim 2, **characterized in that** said rim comprises a bend for jointing to the wall and a wing rim, and the break initiators (126) are entirely contained in the wing return.

5. A cover according to claim 3 or claim 4, **characterized in that** the break initiators (16, 46, 66, 76, 86, 96, 106, 116, 136) are at a non-zero distance from the free edge of the wing return.

6. A cover according to any one of claims 1 to 5, **characterized in that** each of the lateral rims is provided with a plurality of break initiators (16, 26, 36, 46, 56, 66, 76, 86, 96, 106, 116, 126, 136) which are spaced in a periodic manner in the longitudinal direction, the break initiators of each lateral rim being distributed in accordance with the same longitudinal pitch.

7. A cover according to any one of claims 1 to 6, **characterized in that** parallel, at least discontinuous grooves (17, 27, 37, 47, 57, 67, 77, 87, 97, 107, 117, 127, 137, 137A, 137B) extend at least approximately from said break initiators of one snap-fittable rim in the direction of the other lateral rim.

8. A cover according to claim 7, **characterized in that** said parallel, at least discontinuous grooves (137A, 137B) make a non-zero angle of inclination with respect to the longitudinal direction.

9. A cover according to claim 8, **characterized in that** said parallel, at least discontinuous grooves (137A, 137B) make an angle of approximately 45° with respect to the longitudinal direction.

10. A cover according to any one of claims 7 to 9, **characterized in that** said cover comprises at least two families of parallel, at least discontinuous grooves (137, 137A, 137B) which extend at least approximately from said break initiators, said families of grooves having different orientations from one family to another with respect to the longitudinal direction.

11. A cover according to claim 10, **characterized in that** one (137) of the families of at least discontinuous grooves is perpendicular to the longitudinal direction of the cover.

12. A cover according to any one of claims 7 to 11, **characterized in that** since each of the lateral edges is provided with a plurality of break initiators distributed in accordance with the same longitudinal pitch, each of the grooves (17, 27, 37, 47, 57, 67, 77, 87, 97, 107, 117, 127, 137, 137A, 137B) extends at least approximately from one break initiator of one of the lateral rims at least approximately to a break initiator of the other of the lateral rims.

13. A cover according to any one of claims 7 to 12, **characterized in that** the at least discontinuous grooves (17, 27, 37, 77, 87, 97, 107, 117, 127, 137, 137A, 137B) are formed at least on the face of the wall with respect to which the lateral rims project.

14. A cover according to any one of claims 7 to 13, **characterized in that** the at least discontinuous grooves (76) are traversing grooves.

15. Electrical cable ducting comprising two lateral wings (3) formed by tongues (5) separated by slits (4) disposed in accordance with a longitudinal pitch, provided with a cover in accordance with any one of claims 1 to 14 which is snap-fitted on the ends of at least certain of the tongues of one of the lateral wings, at least some of the break initiators (16, 26, 36, 46, 56, 66, 76, 86, 96, 106, 116, 126, 136) of the cover having a longitudinal pitch substantially equal to the pitch of the slits.

## Patentansprüche

1. Einrastbarer Kabelkanaldeckel (10, 20, 30, 40, 50, 60, 70, 80, 90, 100, 110, 120, 130) mit einer in einer Längsrichtung verlaufenden länglichen Wand (11), die von zwei seitlichen Rändern (12, 13) gesäumt ist, von denen wenigstens einer solchermaßen ausgebildet ist, dass er auf einem Seitenteil (3) des Sockels des Kabelkanals (1) einrastbar ist,
**dadurch gekennzeichnet, dass** dieser Rand mit einer Vielzahl von Anrissen (16, 26, 36, 46, 56, 66, 76, 86, 96, 106, 116, 126, 136) versehen ist, die in der Längsrichtung in regelmäßigen Abständen voneinander beabstandet sind.

2. Deckel nach Anspruch 1,
**dadurch gekennzeichnet, dass** diese Anrisse (16, 26, 36, 46, 56, 66, 76, 86, 96, 106, 116, 136) eine durch den Rand hindurch verlaufende Öffnung aufweisen.

3. Deckel nach Anspruch 1 oder Anspruch 2,
**dadurch gekennzeichnet, dass** der Rand eine Biegung am Übergang zur Wand und einen Rücksprung an dem Seitenteil aufweist, und die Anrisse (16, 26, 36, 46, 56, 66, 76) in dieser Übergangsbiegung liegen.

4. Deckel nach Anspruch 1 oder Anspruch 2,
**dadurch gekennzeichnet, dass** der Rand eine Biegung am Übergang zur Wand und einen Rücksprung an dem Seitenteil aufweist, und die Anrisse (126) vollständig in dem Seitenteilrücksprung einbezogen sind.

5. Deckel nach Anspruch 3 oder Anspruch 4,
**dadurch gekennzeichnet, dass** die Anrisse (16, 46, 66, 76, 86, 96, 106, 116, 136) mit einem Abstand von nicht gleich Null zu dem freien Rand des Seitenteilrücksprungs angeordnet sind.

6. Deckel nach einem der Ansprüche 1 bis 5,
**dadurch gekennzeichnet, dass** jeder der Seitenränder mit einer Vielzahl von Anrissen (16, 26, 36, 46, 56, 66, 76, 86, 96, 106, 116, 126, 136) versehen ist, die in der Längsrichtung in regelmäßigen Abständen voneinander beabstandet sind, wobei die Anrisse eines jeden Seitenrands mit dem gleichen Längsabstand verteilt sind.

7. Deckel nach einem der Ansprüche 1 bis 6,
**dadurch gekennzeichnet, dass** zumindest diskontinuierliche parallele Nuten (17, 27, 37, 47, 57, 67, 77, 87, 97, 107, 117, 127, 137, 137A, 137B) wenigstens annähernd von diesen Anrissen ausgehend von einem einrastbaren Rand in Richtung des anderen Seitenrands verlaufen.

8. Deckel nach Anspruch 7,
**dadurch gekennzeichnet, dass** die zumindest diskontinuierlichen parallelen Nuten (137A, 137B) bezüglich der Längsrichtung einen Neigungswinkel von nicht gleich Null aufweisen.

9. Deckel nach Anspruch 8,
**dadurch gekennzeichnet, dass** die zumindest diskontinuierlichen parallelen Nuten (137A, 137B) einen Winkel von etwa 45° bezüglich der Längsrichtung aufweisen.

10. Deckel nach einem der Ansprüche 7 bis 9,
**dadurch gekennzeichnet, dass** der Deckel wenigstens zwei Gruppen zumindest diskontinuierlicher paralleler Nuten (137, 137A, 137B) aufweist, die wenigstens annähernd von diesen Anrissen ausgehend verlaufen, wobei diese Gruppen von Nuten von einer Gruppe zur anderen unterschiedliche Ausrichtungen bezüglich der Längsrichtung aufweisen.

11. Deckel nach Anspruch 10,
**dadurch gekennzeichnet, dass** eine (137) der Gruppen von zumindest diskontinuierlichen Nuten zur Längsrichtung des Deckels senkrecht verläuft.

12. Deckel nach einem der Ansprüche 7 bis 11,
**dadurch gekennzeichnet, dass** jede der Nuten (17, 27, 37, 47, 57, 67, 77, 87, 97, 107, 117, 127, 137, 137A, 137B) wenigstens annähernd von einem Anriss eines der Seitenränder bis zu wenigstens annähernd einem Anriss des anderen Seitenrands verläuft, da jeder der Seitenränder mit einer Vielzahl von Anrissen, die mit dem gleichen Längsabstand verteilt sind, versehen ist.

13. Deckel nach einem der Ansprüche 7 bis 12,
**dadurch gekennzeichnet, dass** die zumindest diskontinuierlichen Nuten (17, 27, 37, 77, 87, 97, 107, 117, 127, 137, 137A, 137B) wenigstens auf einer Seite der Wand gebildet sind, bezüglich der die Seitenränder vorspringen.

14. Deckel nach einem der Ansprüche 7 bis 13,
**dadurch gekennzeichnet, dass** die zumindest diskontinuierlichen Nuten (76) durchgehend sind.

15. Kabelkanal mit zwei Seitenteilen (3), die durch Zungen (5) gebildet sind, die durch Schlitze (4) voneinander getrennt sind, welche mit dem gleichen Längsabstand angeordnet sind, der mit einem Deckel nach einem der Ansprüche 1 bis 14 versehen ist, der auf den Enden von wenigstens einigen der Zungen eines der Seitenteile einrastbar ist, wobei wenigstens ein Teil der Anrisse (16, 26, 36, 46, 56, 66, 76, 86, 96, 106, 116, 126, 136) des Deckels einen Längsabstand hat, der im Wesentlichen dem Abstand der Schlitze entspricht.
